# EUROPEAN PATENT APPLICATION

(11) **EP 4 847 579 A1**
(43) Date of publication of application: **02.12.2026**
(21) Application number: 24920161.7
(22) Date of filing: 09.12.2024
(51) Int. Cl.: C09K 5/04, B60H 1/22, F25B 1/00

(54) **REFRIGERANT-CONTAINING COMPOSITION, USE THEREOF, REFRIGERATION METHOD, AND REFRIGERATING DEVICE**

(30) Priority: 26.01.2024 JP 2024010435
(71) Applicant: DAIKIN INDUSTRIES, LTD., Osaka-shi, Osaka 530-0001 (JP)
(72) Inventor: ITANO, Mitsushi, Osaka-Shi, Osaka 530-0001 (JP); GOTO, Tomoyuki, Osaka-Shi, Osaka 530-0001 (JP); YOSHIMURA, Takashi, Osaka-Shi, Osaka 530-0001 (JP); USUI, Takashi, Osaka-Shi, Osaka 530-0001 (JP); TOKUNO, Satoshi, Osaka-Shi, Osaka 530-0001 (JP); OZAKI, Taichi, Osaka-Shi, Osaka 530-0001 (JP)
(74) Representative: Hoffmann Eitle
(86) International application number: PCT/JP2024/043452
(87) International publication number: WO 2025/158804

(57) **Abstract**

The present invention provides a novel mixed refrigerant.

The present invention provides a composition comprising a refrigerant, the refrigerant comprising trans-1,2-difluoroethylene (HFO-1132(E) or E-HFO-1132) and at least one hydrofluoroolefin represented by formula: CHXXCX=CHX, wherein each X is the same or different and is a hydrogen atom or a fluorine atom, and at least one X is a fluorine atom, and the refrigerant comprising HFO-1132(E) and the hydrofluoroolefin in a total amount of 99.5 mass% or more based on the entire refrigerant.

## Description

### Technical Field

The present disclosure relates to a composition comprising a refrigerant, use of the composition, a refrigeration method, and a refrigeration apparatus.

### Background Art

A mixed refrigerant containing at least one compound selected from the group consisting of three fluoroolefins having specific structures has been proposed (Patent Literature 1).

### Citation List

### Patent Literature

PTL 1: JP2009-518460A

### Summary of Invention

### Technical Problem

An object of the present disclosure is to provide a novel mixed refrigerant.

### Solution to Problem

Item 1. A composition comprising a refrigerant,
the refrigerant comprising trans-1,2-difluoroethylene (HFO-1132(E) or E-HFO-1132) and at least one hydrofluoroolefin represented by formula: CHXXCX=CHX, wherein each X is the same or different and is a hydrogen atom or a fluorine atom, and at least one X is a fluorine atom, and
the refrigerant comprising HFO-1132(E) and the hydrofluoroolefin in a total amount of 99.5 mass% or more based on the entire refrigerant.

Item 2. The composition according to Item 1, which has a boiling point of -40°C or lower.

Item 3. The composition according to Item 1 or 2, wherein the hydrofluoroolefin is at least one hydrofluoroolefin selected from the group consisting of CHF₂CH=CH₂, CH₃CF=CH₂, CH₃CH=CHF, E-CHF₂CF=CHF, CHF₂CF=CH₂, CH₂FCH=CH₂, CH₂FCF=CH₂, E-CHF₂CH=CHF, and Z-CHF₂CH=CHF.

Item 4. The composition according to any one of Items 1 to 3, wherein the refrigerant comprises HFO-1132(E) in an amount of 25 to 60 mass% based on the entire refrigerant.

Item 5. The composition according to any one of Items 1 to 3, wherein
the hydrofluoroolefin is CHF₂CH=CH₂; and
the refrigerant comprises HFO-1132(E) and CHF₂CH=CH₂ in a total amount of 99.5 mass% or more based on the entire refrigerant, and comprises HFO-1132(E) in an amount of 25 to 56 mass% based on the entire refrigerant.

Item 6. The composition according to any one of Items 1 to 3, wherein
the hydrofluoroolefin is CH₃CF=CH₂; and
the refrigerant comprises HFO-1132(E) and CH₃CF=CH₂ in a total amount of 99.5 mass% or more based on the entire refrigerant, and comprises HFO-1132(E) in an amount of 35 to 59 mass% based on the entire refrigerant.

Item 7. The composition according to any one of Items 1 to 3, wherein
the refrigerant comprises HFO-1132(E) and CH₃CH=CHF in a total amount of 99.5 mass% or more based on the entire refrigerant, and comprises HFO-1132(E) in an amount of 36 to 59 mass% based on the entire refrigerant.

Item 8. The composition according to any one of Items 1 to 3, wherein
the refrigerant comprises HFO-1132(E) and E-CHF₂CF=CHF in a total amount of 99.5 mass% or more based on the entire refrigerant, and comprises HFO-1132(E) in an amount of 35 to 53 mass% based on the entire refrigerant.

Item 9. The composition according to any one of Items 1 to 3, wherein
the refrigerant comprises HFO-1132(E) and CHF₂CF=CH₂ in a total amount of 99.5 mass% or more based on the entire refrigerant, and comprises HFO-1132(E) in an amount of 31 to 59 mass% based on the entire refrigerant.

Item 10. The composition according to any one of Items 1 to 9, which is for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

Item 11. The composition according to any one of Items 1 to 9, which is a refrigerant for heat pumps or a refrigerant for air-conditioning systems for vehicles.

Item 12. The composition according to any one of Items 1 to 9, which is a refrigerant for gasoline vehicles, a refrigerant for hybrid vehicles, a refrigerant for electric vehicles, or a refrigerant for hydrogen vehicles.

Item 13. A refrigeration method comprising operating a refrigeration cycle using the composition of any one of Items 1 to 9.

Item 14. A refrigeration apparatus comprising the composition of any one of Items 1 to 9 as a working fluid.

Item 15. Use of the composition of any one of Items 1 to 9 as a working fluid.

### Advantageous Effects of Invention

The present disclosure provides a novel mixed refrigerant.

### Description of Embodiments

In order to achieve the above object, the present inventors conducted extensive research and found that the various mixed refrigerants described below have the characteristics described above.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises one or more other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition," "composition comprising a refrigerant," or "composition" so as to distinguish it from a refrigerant itself (including a mixture of refrigerants). Further, the working fluid for a refrigerating machine (3) is referred to as a "refrigeration-oil-containing working fluid" or "working fluid" so as to distinguish it from the "refrigerant composition."

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work and thereby perform energy conversion, in order to transfer heat from where the temperature is lower to where the temperature is higher.

In the present specification, the term "air-conditioning system for vehicles" refers to a type of refrigeration apparatus used in vehicles such as gasoline vehicles, hybrid vehicles, electric vehicles, and hydrogen vehicles. The air-conditioning system for vehicles refers to a refrigeration apparatus including refrigeration cycles in which heat exchange is performed in a liquid refrigerant by an evaporator, the thus-evaporated refrigerant gas is sucked by a compressor, the thus-adiabatically compressed refrigerant gas is cooled to be liquefied by a condenser, the resultant is allowed to pass through an expansion valve for adiabatic expansion, and then the resultant is supplied again to the evaporator as a liquid refrigerant.

The unit of pressure described in the present specification is absolute pressure, unless otherwise specified.

The boiling point described in the present specification is the boiling point at standard atmospheric pressure, unless otherwise specified.

### 1. Refrigerant

The refrigerant according to the present disclosure comprises trans-1,2-difluoroethylene (HFO-1132(E)) and at least one hydrofluoroolefin represented by formula: CHXXCX=CHX, wherein each X is the same or different and is a hydrogen atom or a fluorine atom, and at least one X is a fluorine atom.

The refrigerant according to the present disclosure preferably has a boiling point of -40°C or lower.

The refrigerant according to the present disclosure is preferably a refrigerant that does not undergo disproportionation at 150°C and 3 Mpa.

The hydrofluoroolefin is preferably at least one hydrofluoroolefin selected from the group consisting of CHF₂CH=CH₂, CH₃CF=CH₂, CH₃CH=CHF, E-CHF₂CF=CHF, CHF₂CF=CH₂, CH₂FCH=CH₂, CH₂FCF=CH₂, E-CHF₂CH=CHF, and Z-CHF₂CH=CHF.

Preferably, the refrigerant comprises HFO-1132(E) and the hydrofluoroolefin in a total amount of 99.5 mass% or more based on the entire refrigerant, and comprises HFO-1132(E) in an amount of 25 to 60 mass% based on the entire refrigerant.

Preferably, the refrigerant comprises HFO-1132(E) and the hydrofluoroolefin in a total amount of 99.5 mass% or more based on the entire refrigerant, and comprises HFO-1132(E) in an amount of 25 to 56 mass% based on the entire refrigerant.

Preferably, the refrigerant comprises HFO-1132(E) and the hydrofluoroolefin in a total amount of 99.5 mass% or more based on the entire refrigerant, and comprises HFO-1132(E) in an amount of 35 to 59 mass% based on the entire refrigerant.

Preferably, the refrigerant comprises HFO-1132(E) and the hydrofluoroolefin in a total amount of 99.5 mass% or more based on the entire refrigerant, and comprises HFO-1132(E) in an amount of 35 to 53 mass% based on the entire refrigerant.

Preferably, the refrigerant comprises HFO-1132(E) and the hydrofluoroolefin in a total amount of 99.5 mass% or more based on the entire refrigerant, and comprises HFO-1132(E) in an amount of 31 to 50 mass% based on the entire refrigerant.

The refrigerant according to the present disclosure may further comprise an additional refrigerant in addition to HFO-1132(E) and the hydrofluoroolefin as long as the properties and effects described above are not impaired. In this respect, the refrigerant according to the present disclosure comprises HFO-1132(E) and the hydrofluoroolefin in a total amount of preferably 99.5 mass% or more, more preferably 99.75 mass% or more, even more preferably 99.9 mass% or more, still even more preferably 99.999 mass% or more, and most preferably 99.9999 mass% or more, based on the entire refrigerant. The refrigerant according to the present disclosure may essentially consist of HFO-1132(E) and the hydrofluoroolefin; in this case, the refrigerant according to the present disclosure may consist of HFO-1132(E), the hydrofluoroolefin, and unavoidable impurities. The refrigerant according to the present disclosure may also consist of HFO-1132(E) and the hydrofluoroolefin.

Additional refrigerants are not limited and can be selected from a wide range. The mixed refrigerant may comprise one additional refrigerant, or two or more additional refrigerants. Examples of additional refrigerants include R32, acetylene, methylamine, HFO-1132a, HFO-1141, HFO-1123, HFC-143a, HFC-134a, Z-HFO-1132, HFO-1243zf, HFC-245cb, HCFC-1122, HCFC-124, CFC-1113, 3,3,3-trifluoropropyne, and the like.

The refrigerant according to the present disclosure with a boiling point of -40.0°C or lower is advantageous in that it is easily used in heating with a heat pump. For example, using the refrigerant according to the present disclosure in operating a refrigeration cycle of an air-conditioning system for vehicles advantageously enables heating with a heat pump that consumes less power than an electric heater. Examples of air-conditioning systems for vehicles include those for gasoline vehicles, hybrid vehicles, electric vehicles, hydrogen vehicles, or the like.

### 2. Refrigerant Composition

The refrigerant composition according to the present disclosure (which may be referred to as the "composition containing a refrigerant" or "composition") comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for refrigerating machines.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content in the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration so that the tracer can trace changes in the refrigerant composition, such as dilution, contamination, or other changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃F)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition according to the present disclosure may comprise about 10 parts per million by weight (ppm) or more of tracers in total, based on the entire refrigerant composition. The refrigerant composition according to the present disclosure may also comprise about 1000 ppm or less of tracers in total, based on the entire refrigerant composition. The refrigerant composition according to the present disclosure may preferably comprise about 30 ppm or more and more preferably about 50 ppm or more of tracers in total, based on the entire refrigerant composition. The refrigerant composition according to the present disclosure may preferably comprise about 500 ppm or less or about 300 ppm or less of tracers in total, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

### 3. Refrigeration-oil-containing Working Fluid

The refrigeration-oil-containing working fluid according to the present disclosure (which may be referred to as the "working fluid") comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally contains 10 mass% or more of a refrigeration oil. The refrigeration-oil-containing working fluid generally contains 50 mass% or less of a refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additives may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the viewpoint of lubrication. A refrigeration oil with a kinematic viscosity of 400 cSt or less at 40°C is preferable from the viewpoint of lubrication.

The refrigeration-oil-containing working fluid according to the present disclosure may further optionally comprise at least one additive. Examples of additives include the compatibilizing agents described below.

### 3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4.1 Refrigeration Method

The refrigeration method according to the present disclosure is a refrigeration method using the composition according to the present disclosure.

Specifically, the refrigeration method according to the present disclosure comprises operating a refrigeration cycle using the composition according to the present disclosure.

### 4.2 Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### 5. Method for Suppressing Disproportionation Reaction

A method for suppressing a disproportionation reaction according to the present disclosure is a method for suppressing a disproportionation reaction of HFO-1132(E) comprising the step of operating a refrigeration cycle using the refrigerant according to the present disclosure.

The method for suppressing a disproportionation reaction according to the present disclosure provides the effect that a disproportionation reaction of HFO-1132(E) does not occur, in particular, even at a refrigerant pressure of 3.0 MPa and at a refrigerant temperature of 150°C.

The method for suppressing a disproportionation reaction according to the present disclosure suppresses a disproportionation reaction even in a refrigerating machine not equipped with means for suppressing a disproportionation reaction to enable the operation of the refrigeration cycle.

### 6. Use for Suppressing Disproportionation Reaction

The use according to the present disclosure is use of the at least one hydrofluoroolefin represented by formula: CHXXCX=CHX, wherein each X is the same or different and is a hydrogen atom or a fluorine atom, for suppressing a disproportionation reaction of HFO-1132(E), and the suppression of a disproportionation reaction is achieved by mixing HFO-1132(E) and the hydrofluoroolefin in the mixing ratio of the refrigerant according to the present disclosure.

The use for suppressing a disproportionation reaction according to the present disclosure provides the effect that a disproportionation reaction of HFO-1132(E) does not occur, in particular, even at a refrigerant pressure of 3.0 MPa and at a refrigerant temperature of 150°C.

### 7. Use as Alternative Refrigerant

The composition according to the present disclosure is preferably used as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

### 8. Use as Working Fluid

The composition according to the present disclosure can be used as a working fluid.

That is, the use according to the present disclosure is the use of the composition according to the present disclosure as a working fluid.

### 9. Refrigeration Apparatus

The refrigeration apparatus according to the present disclosure comprises the composition described above.

That is, the refrigeration apparatus according to the present disclosure is a refrigeration apparatus comprising the composition according to the present disclosure as a working fluid.

Embodiments of the present disclosure are described above; however, it will be understood that various changes in form and detail can be made without departing from the spirit and scope of the claims.

### Examples

The present disclosure is described in more detail below with reference to Examples. However, the present disclosure is not limited to the Examples.

Mixed refrigerants were prepared by mixing HFO-1132(E) and CHXXCX=CHX of each example in the percentages by mass shown in each table, based on their sum.

Each of these mixed refrigerants was examined in terms of the presence or absence of a disproportionation reaction according to the following test method under the following test conditions.

### Test Method

A refrigerant composition to be tested was transferred to a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature in the apparatus.

### Test Conditions

Test container: 38 cc SUS container
Test temperature: 150°C
Pressure: 3 MPa

### Determination Criteria

Non-explosion: The temperature or pressure after the melting and cutting of the Pt wire was less than twice as high, and no rapid disproportionation reaction occurred.

Explosion: The temperature or pressure after the melting and cutting of the Pt wire reached double or more, and a rapid disproportionation reaction occurred.

**Table 1**

| Item | Unit | Reference Example: CH₃CH=CH₂ | | | Example 1: CHF₂CH=CH₂ | | | Example 2: CH₃CF=CH₂ | | | Example 3: CH₃CH=CHF | | |
|---|---|---|---|---|---|---|---|---|---|---|---|---|---|
| HFO-1132(E) | mass% | 64 | 62 | 60 | 58 | 56 | 54 | 61 | 59 | 57 | 61 | 59 | 57 |
| Example | mass% | 36 | 38 | 40 | 42 | 44 | 46 | 39 | 41 | 43 | 39 | 41 | 43 |
| Disproportionation reaction (3 Mpa) | - | Explosion | Non-explosion | Non-explosio n | Explosio n | Non-explosio n | Non-explosio n | Explosio n | Non-explosio n | Non-explosio n | Explosio n | Non-explosio n | Non-explosio n |

| Item | Unit | Example 4: E-CHF₂CF=CHF | | | Example 5: CHF₂CF=CH₂ | | | Example 6: CH₂FCH=CH₂ | | | Example 7: CH₂FCF=CH₂ | | |
|---|---|---|---|---|---|---|---|---|---|---|---|---|---|
| HFO-1132(E) | mass% | 52 | 50 | 48 | 55 | 53 | 51 | 62 | 60 | 58 | 58 | 56 | 54 |
| Example | mass% | 48 | 50 | 52 | 45 | 47 | 49 | 38 | 40 | 42 | 42 | 44 | 46 |
| Disproportionation reaction (3 Mpa) | - | Explosion | Non-explosion | Non-explosio n | Explosio n | Non-explosio n | Non-explosio n | Explosio n | Non-explosio n | Non-explosio n | Explosio n | Non-explosio n | Non-explosio n |

| Item | Unit | Example 8: E-CHF₂CH=CHF | | | Example 9: Z-CHF₂CH=CHF | | | Example 10: CH₃CF=CHF | | | Example 11: E-CH₂FCH=CHF | | |
|---|---|---|---|---|---|---|---|---|---|---|---|---|---|
| HFO-1132(E) | mass% | 56 | 54 | 52 | 56 | 54 | 52 | 59 | 57 | 55 | 59 | 57 | 55 |
| Example | mass% | 44 | 46 | 48 | 44 | 46 | 48 | 41 | 43 | 45 | 41 | 43 | 45 |
| Disproportionation reaction (3 Mpa) | - | Explosion | Non-explosion | Non-explosio n | Explosio n | Non-explosio n | Non-explosio n | Explosio n | Non-explosio n | Non-explosio n | Explosio n | Non-explosio n | Non-explosio n |

| Item | Unit | Example 12: Z-CH₂FCH=CHF | | | Example 13: Z-CHF₂CF=CHF | | | Example 14: E-CH₂FCF=CHF | | | Example 15: Z-CH₂FCF=CHF | | |
|---|---|---|---|---|---|---|---|---|---|---|---|---|---|
| HFO-1132(E) | mass% | 59 | 57 | 55 | 53 | 51 | 49 | 57 | 55 | 53 | 57 | 55 | 53 |
| Example | mass% | 41 | 43 | 45 | 47 | 49 | 51 | 43 | 45 | 47 | 43 | 45 | 47 |
| Disproportionation reaction (3 Mpa) | - | Explosion | Non-explosion | Non-explosio n | Explosio n | Non-explosio n | Non-explosio n | Explosio n | Non-explosio n | Non-explosio n | Explosio n | Non-explosio n | Non-explosio n |

Furthermore, mixed refrigerants were prepared by mixing HFO-1132(E) with a boiling point of -52.6°C and CHXXCX=CHX of each example, and the concentration of HFO-1132(E) at which the boiling point becomes -40°C was examined.

Table 2 shows the boiling points of substances with molecular formulas of the examples, the concentration of HFO-1132(E) at which the boiling point of a mixture of the substance represented by each molecular formula and HFO-1132(E) is -40°C, and the concentration of HFO-1132(E) at which a mixture of the substance represented by each molecular formula and HFO-1132(E) reaches the disproportionation limit of HFO-1132(E).

**Table 2**

| Example | Molecular formula | Boiling point of example | Concentration of HFO-1132(E) at which the boiling point of a mixture of example and HFO-1132(E) is -40°C | Concentration of HFO-1132(E) at which a mixture of example and HFO-1132(E) reaches the disproportionation limit |
|---|---|---|---|---|
| | | °C | (mass%) | (mass%) |
| Reference Example 1 | CH₃CH=CH₂ | -48.0 | - | 62 |
| Example 1 | CHF₂CH=CH₂ | -26.5 | 25 | 56 |
| Example 2 | CH₃CF=CH₂ | -24.0 | 35 | 59 |
| Example 3 | CH₃CH=CHF | -23.4 | 36 | 59 |
| Example 4 | E-CHF₂CF=CHF | -13.0 | 31 | 50 |
| Example 5 | CHF₂CF=CH₂ | -10.0 | 35 | 53 |
| Example 6 | CH₂FCH=CH₂ | -3.0 | 47 | 60 |
| Example 7 | CH₂FCF=CH₂ | -0.2 | 41 | 56 |
| Example 8 | E-CHF₂CH=CHF | 4.0 | 37 | 54 |
| Example 9 | Z-CHF₂CH=CHF | 4.0 | 37 | 54 |
| Example 10 | CH₃CF=CHF | 9.3 | 43 | 57 |
| Example 11 | E-CH₂FCH=CHF | 9.8 | 43 | 57 |
| Example 12 | Z-CH₂FCH=CHF | 9.8 | 43 | 57 |
| Example 13 | Z-CHF₂CF=CHF | 17.0 | 35 | 51 |
| Example 14 | E-CH₂FCF=CHF | 31.8 | 42 | 55 |
| Example 15 | Z-CH₂FCF=CHF | 31.8 | 42 | 55 |

## Claims

1. A composition comprising a refrigerant,
the refrigerant comprising trans-1,2-difluoroethylene (HFO-1132(E) or E-HFO-1132) and at least one hydrofluoroolefin represented by formula: CHXXCX=CHX, wherein each X is the same or different and is a hydrogen atom or a fluorine atom, and at least one X is a fluorine atom, and
the refrigerant comprising HFO-1132(E) and the hydrofluoroolefin in a total amount of 99.5 mass% or more based on the entire refrigerant.

2. The composition according to claim 1, which has a boiling point of -40°C or lower.

3. The composition according to claim 1, wherein the hydrofluoroolefin is at least one hydrofluoroolefin selected from the group consisting of CHF₂CH=CH₂, CH₃CF=CH₂, CH₃CH=CHF, E-CHF₂CF=CHF, CHF₂CF=CH₂, CH₂FCH=CH₂, CH₂FCF=CH₂, E-CHF₂CH=CHF, and Z-CHF₂CH=CHF.

4. The composition according to claim 1, wherein the refrigerant comprises HFO-1132(E) in an amount of 25 to 60 mass% based on the entire refrigerant.

5. The composition according to claim 1, wherein
the hydrofluoroolefin is CHF₂CH=CH₂; and
the refrigerant comprises HFO-1132(E) and CHF₂CH=CH₂ in a total amount of 99.5 mass% or more based on the entire refrigerant, and comprises HFO-1132(E) in an amount of 25 to 56 mass% based on the entire refrigerant.

6. The composition according to claim 1, wherein
the hydrofluoroolefin is CH₃CF=CH₂; and
the refrigerant comprises HFO-1132(E) and CH₃CF=CH₂ in a total amount of 99.5 mass% or more based on the entire refrigerant, and comprises HFO-1132(E) in an amount of 35 to 59 mass% based on the entire refrigerant.

7. The composition according to any one of claims 1 to 6, which is for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

8. The composition according to any one of claims 1 to 6, which is a refrigerant for heat pumps or a refrigerant for air-conditioning systems for vehicles.

9. The composition according to any one of claims 1 to 6, which is a refrigerant for gasoline vehicles, a refrigerant for hybrid vehicles, a refrigerant for electric vehicles, or a refrigerant for hydrogen vehicles.

10. A refrigeration method comprising operating a refrigeration cycle using the composition of any one of claims 1 to 6.

11. A refrigeration apparatus comprising the composition of any one of claims 1 to 6 as a working fluid.

12. Use of the composition of any one of claims 1 to 6 as a working fluid.
